# EUROPEAN PATENT APPLICATION

(11) **EP 4 322 259 A1**
(43) Date of publication of application: **14.02.2024**
(21) Application number: 22930149.4
(22) Date of filing: 16.06.2022
(51) Int. Cl.: H01M 4/505, H01M 4/62, H01M 10/0525

(54) **POSITIVE ELECTRODE MATERIAL, MANUFACTURING METHOD THEREFOR, AND SECONDARY BATTERY HAVING SAME**

(71) Applicant: Contemporary Amperex Technology Co., Limited, Ningde City, Fujian 352100 (CN)
(72) Inventor: ZHAO, Dong, Ningde, Fujian 352100 (CN); WU, Qi, Ningde, Fujian 352100 (CN); FAN, Jingpeng, Ningde, Fujian 352100 (CN); CHEN, Qiang, Ningde, Fujian 352100 (CN); WANG, Jing, Ningde, Fujian 352100 (CN); LIU, Na, Ningde, Fujian 352100 (CN)
(74) Representative: Kraus & Lederer PartGmbB
(86) International application number: PCT/CN2022/099191
(87) International publication number: WO 2023/240544

(57) **Abstract**

This application provides a positive electrode material and a manufacturing method thereof, and a secondary battery having the positive electrode material. The positive electrode material includes a core, where the core includes a lithium-rich manganese-based positive electrode material; and a coating layer, where the coating layer envelops outer surface of the core and includes a composite material of a transition metal oxoacid salt and carbon, where the transition metal in the transition metal oxoacid salt is selected from at least one of Ti, Mo, W, V, Ta, Nb or Nd and the composite material has a mesh structure. The secondary battery prepared using the positive electrode material according to this application exhibits characteristics of high energy density, initial charge-discharge efficiency, cycling performance, and rate performance.

## Description

### TECHNICAL FIELD

This application relates to the electrochemical field, and in particular, to a positive electrode material, a preparation method thereof, and a secondary battery, a battery module, a battery pack, and an electric apparatus including the same.

### BACKGROUND

Lithium-rich manganese-based materials have a high discharge voltage plateau and a high theoretical specific capacity, thus possessing a high theoretical specific energy density. However, in the high voltage charging state of 4.5 V or more in the first cycle, some lithium ions in the transition metal layer of a lithium-rich manganese-based material may be removed together with oxygen, resulting in extraction of Li₂O. It is difficult for these crystal vacancies to accept lithium ions in subsequent charge-discharge processes, leading to a lower initial charge-discharge efficiency of the material. Additionally, the formation of a large number of oxygen vacancies causes migration of transition metal ions and rearrangement of the crystal structure, resulting in instability in material structure and deterioration of cycling performance. Furthermore, the low electronic and ionic conductivity of lithium-rich materials, coupled with intensified side reactions between the material surface and the electrolyte under high voltage, leads to poor rate performance of the material.

### SUMMARY

This application is carried out in view of the foregoing issues. An objective of this application is to provide a positive electrode material and a preparation method thereof, and a secondary battery, a battery module, a battery pack, and an electric apparatus including the positive electrode material. The secondary battery prepared using the positive electrode material exhibits characteristics of high energy density, initial charge-discharge efficiency, cycling performance, and rate performance.

To achieve the foregoing objective, a first aspect of this application provides a positive electrode material, including a core containing a lithium-rich manganese-based positive electrode material and a coating layer enveloping outer surface of the core and including a composite material of a transition metal oxoacid salt and carbon, where the transition metal in the transition metal oxoacid salt is at least one selected from Ti, Mo, W, V, Ta, Nb, or Nd, and the composite material has a mesh structure.

In contrast to the conventional way of forming oxygen vacancies directly on the surface layer of the material, coating the surface of the lithium-rich manganese-based material with an oxygen vacancy-rich material will not cause the structure of the surface layer of the material to be reconstructed or destroyed. This facilitates the stability of the structure of the material itself. Particularly, when the composite material with a mesh structure contains carbon, through the synergistic effect of carbon coating, not only the formation and protection of oxygen vacancies are promoted, but also the problem of low electronic conductivity of the material itself is alleviated. This reduces the release of lattice oxygens and improves the reversibility of the oxidation-reduction reaction of oxygen anions during high-voltage cycling processes of the material. In addition, the rate performance of the material can also be improved efficiently. Therefore, the secondary battery prepared using the above positive electrode material exhibits characteristics of high energy density, initial charge-discharge efficiency, cycling performance, and rate performance.

In some embodiments, the transition metal in the transition metal oxoacid salt is at least one selected from Ti, Mo, W, or V Therefore, the surface of the lithium-rich manganese-based material be easily coated with the composite material of transition metal oxoacid salt and carbon.

In some embodiments, the transition metal oxoacid salt is at least one of Li, Na, K, Mg, or Al salts. Optionally, the transition metal oxoacid salt is at least one of Li, Na, or K salts. Therefore, the surface of the lithium-rich manganese-based material be easily coated with the composite material of transition metal oxoacid salt and carbon.

In some embodiments, the molecular formula of the lithium-rich manganese-based positive electrode material is xLi₂MnO₃•(1-x)LiNi_{y}Co_{z}MnₐM_{1-y-z-a}OᵣA₂₋ᵣ, where 0 < x < 1, 0 ≤ y ≤ 1, 0 ≤ z ≤1, 0 ≤ a ≤ 1, 0 < r ≤ 2, and 0 < y+z+a ≤1; M is at least one of Mg, B, Al, V, Ti, Zr, Sn, and Mo; and A is at least one of F, S, N, and Cl. Therefore, the surface of various lithium-rich manganese-based materials can be coated with the composite material of transition metal oxoacid salt and carbon.

In some embodiments, in the coating layer, the transition metal oxoacid salt contains oxygen vacancies. Optionally, the transition metal oxoacid salt satisfies the conditions: peak intensity ratio of IO₂²⁻/IO²⁻ is 0.5 to 1.2, optionally 0.6 to 0.8; where IO₂²⁻ represents a peak intensity value of oxygen vacancy at 531 eV in an X-ray photoelectron spectroscopy (XPS) test, and IO²⁻ represents a peak intensity value of lattice oxygen at 529 eV in the X-ray photoelectron spectroscopy (XPS) test. Therefore, the presence of oxygen vacancies on the surface of the lithium-rich manganese-based positive electrode material can be corroborated by the peak intensity ratio of IO₂²⁻/IO² in the coating material. More oxygen vacancies indicate a higher the peak intensity ratio. This provides the ability to keep the oxygen vacancies formed on the surface of the lithium-rich manganese-based material in a suitable range, so that the release of oxygen during the charge and discharge process of the material can be suppressed; and in addition, the extractable capability of the material can be ensured.

In some embodiments, a powder resistivity of the positive electrode material at 12 MPa is less than or equal to 3000 Ω·cm, preferably less than or equal to 2000 Ω·cm. The oxygen vacancies in the surface layer of the lithium-rich manganese-based positive electrode material can promote the transport of electrons and lithium ions of the material. The surface carbon coating can further enhance the electronic conductivity of the material, thereby further improving the initial charge-discharge efficiency and rate performance of the positive electrode material.

In some embodiments, a particle type of the positive electrode material is secondary particle, single crystal, or quasi-single crystal, and particle size Dᵥ50 of the particles is between 1 µm to 20 µm, optionally 3 µm to 15 µm. Therefore, the lithium-rich manganese-based positive electrode material has a regular morphology, uniform particle size distribution, and stable structure, thereby ensuring that a lithium-rich manganese-based battery has a high energy density and excellent cycling performance.

In some embodiments, a specific surface area of the positive electrode material is less than 2.0 m²/g, optionally 0.1 m²/g to 1 m²/g. Therefore, the lithium-rich manganese-based positive electrode material has a low specific surface area and a high compacted density, thereby ensuring that a lithium-rich manganese-based battery has a high energy density and excellent cycling performance.

The second aspect of this application provides a preparation method of the positive electrode material according to the first aspect of this application. The method includes the following processes: solution preparation process: dispersing a transition metal oxide in deionized water, adding an organic acid salt, adjusting solution pH to a neutral to alkaline range, and then stirring thoroughly to obtain a solution; hydrothermal reaction process: slowly adding lithium-rich manganese-based positive electrode material to the solution for reaction at a constant temperature of 50°C to 100°C for about 2 h to 10 h; drying process: filtering a product of the hydrothermal reaction, and drying a solid obtained by filtration; and sintering process: sintering the dried solid at 300 °C to 600 °C in an inert atmosphere for 4 h to 15 h to obtain a surface modified lithium-rich manganese-based positive electrode material; where the transition metal oxide includes at least one of Ti, Mo, W, V, Ta, Nb, or Nd oxides; and an acid ion of the organic acid salt is at least one of an acetate ion, an oxalate ion, or a citrate ion.

Through the above method, the transition metal oxide and organic acid salt are uniformly coated on the surface of the lithium-rich manganese-based material through a hydrothermal process. Through thermal treatment in an inert atmosphere, the organic acid salt undergoes thermal decomposition, resulting in the simultaneous formation of carbon and transition metal oxoacid salt generated from the reactions between the transition metal oxide and the organic acid salt. The presence of carbon promotes the generation of oxygen vacancies in the transition metal oxoacid salt. Ultimately, a composite material including transition metal oxoacid salt containing oxygen vacancies and carbon is coated on the surface of the lithium-rich manganese-based material.

In some embodiments, a counter ion of the organic acid ion in the organic acid salt is an ion of at least one metal selected from Li, Na, K, Mg, or Al, preferably an ion of at least one metal selected from Li, Na, or K. Therefore, the surface of the lithium-rich manganese-based material can be easily coated with the composite material of transition metal oxoacid salt and carbon.

In some embodiments, in the solution preparation process, a pH of the solution is controlled within the range of 7 to 15, preferably within the range of 8 to 10. Therefore, the surface of the lithium-rich manganese-based material can be easily coated with the composite material of transition metal oxoacid salt and carbon.

In some embodiments, a mass ratio of the transition metal oxide to the organic acid salt is (0.05-10):1, preferably (0.5-2):1. Therefore, the composite material of transition metal oxoacid salt and carbon coated on the surface of the lithium-rich manganese-based material can be stably formed, and the amount of oxygen vacancies in the transition metal oxoacid salt can be adjusted appropriately.

In some embodiments, a ratio of the mass of the lithium-rich manganese-based material added to the mass sum of the transition metal oxide and the organic acid salt is 100:(0.1-30), preferably 100:(1-10). Therefore, by adjusting the ratio of the mass of lithium-rich manganese-based material to the mass sum of the transition metal oxide and the organic acid salt within the above ranges, it is advantageous to regulate the thickness of the coating layer. An increase in the coating amount enables more oxygen vacancies in the transition metal oxoacid salt to be formed within the coating layer.

In some embodiments, in the drying process, the drying temperature is 60°C to 120°C, preferably 80°C to 100°C; and/or the drying time is 1 h to 10 h, preferably 5 h to 8; and/or the drying atmosphere is a vacuum atmosphere, with a vacuum degree maintained at -0.5 bar to -1 bar. Therefore, through vacuum drying, excess moisture on the surface of the material is removed, preventing oxidation of the material surface and avoiding the destruction of oxygen vacancies formed on the surface layer. This allows for appropriate adjustment of the amount of oxygen vacancies in the transition metal oxoacid salt.

In some embodiments, in the sintering process, the inert atmosphere is a nitrogen or argon atmosphere. Therefore, the formation of oxygen vacancies in the transition metal oxoacid salt can be further promoted, while a uniform and tight coating effect of the coating on the surface is achieved.

A third aspect of this application provides a secondary battery, where the secondary battery includes the positive electrode material according to the first aspect of this application or a positive electrode material prepared using the preparation method according to the second aspect of this application.

A fourth aspect of this application provides a battery module, where the battery module includes the secondary battery according to the third aspect of this application.

A fifth aspect of this application provides a battery pack, where the battery pack includes the battery module according to the fourth aspect of this application.

A sixth aspect of this application provides an electric apparatus, where the electric apparatus includes at least one of the secondary battery according to the third aspect of this application, the battery module according to the fourth aspect of this application, or the battery pack according to the fifth aspect of this application.

According to this application, it is possible to enable the secondary battery to exhibit characteristics of high energy density, initial charge-discharge efficiency, cycling performance, and rate performance.

### BRIEF DESCRIPTION OF DRAWINGS

FIG. 1 is a scanning electron microscope image of a positive electrode material according to an embodiment of this application.
FIG. 2 is a scanning electron microscope image of the positive electrode material shown in FIG. 1 at a different magnification.
FIG. 3 is an XPS spectrum of a positive electrode material according to an embodiment of this application.
FIG. 4 is a schematic diagram of a secondary battery according to an embodiment of this application.
FIG. 5 is an exploded view of the secondary battery according to the embodiment of this application in FIG. 4.
FIG. 6 is a schematic diagram of a battery module according to an embodiment of this application.
FIG. 7 is a schematic diagram of a battery pack according to an embodiment of this application.
FIG. 8 is an exploded view of the battery pack according to the embodiment of this application in FIG. 7.
FIG. 9 is a schematic diagram of an electric apparatus using a secondary battery as a power source according to an embodiment of this application.

Reference signs in the accompanying drawings are described as follows:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following specifically discloses in detail embodiments of the positive electrode material, manufacturing method thereof, secondary battery, battery module, battery pack, and electric apparatus of this application with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if lower limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combinations of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In an embodiment of this application, a positive electrode material is proposed, including a core, where the core includes a lithium-rich manganese-based positive electrode material; and a coating layer, where the coating layer envelops an outer surface of the core and includes a composite material of a transition metal oxoacid salt and carbon, where the transition metal in the transition metal oxoacid salt is selected from at least one of Ti, Mo, W, V, Ta, Nb, or Nd and the composite material has a mesh structure.

Although the mechanism is not clear, the inventors of this application have surprisingly found that: by coating the transition metal oxoacid salt and a composite material with a mesh structure on the outer surface of a lithium-rich manganese-based positive electrode material, it is possible to enable the secondary battery to exhibit characteristics of high energy density, initial charge-discharge efficiency, cycling performance, and rate performance.

The inventors of this application speculate that: in contrast to the conventional way of forming oxygen vacancies directly on the surface layer of the material, coating the surface of a lithium-rich manganese-based material with the transition metal oxoacid salt rich in oxygen vacancies and a composite material with a mesh structure will not cause the structure of the surface layer of the material to be reconstructed or destroyed. This facilitates the stability of the structure of the material itself. Particularly, when the composite material with a mesh structure contains carbon, through the synergistic effect of carbon coating, not only the formation and protection of oxygen vacancies are promoted, but also the problem of low electronic conductivity of the material itself is alleviated. This reduces the release of lattice oxygens and improves the reversibility of the oxidation-reduction reaction of oxygen anions during high-voltage cycling processes of the material. In addition, the rate performance of the material can also be improved efficiently.

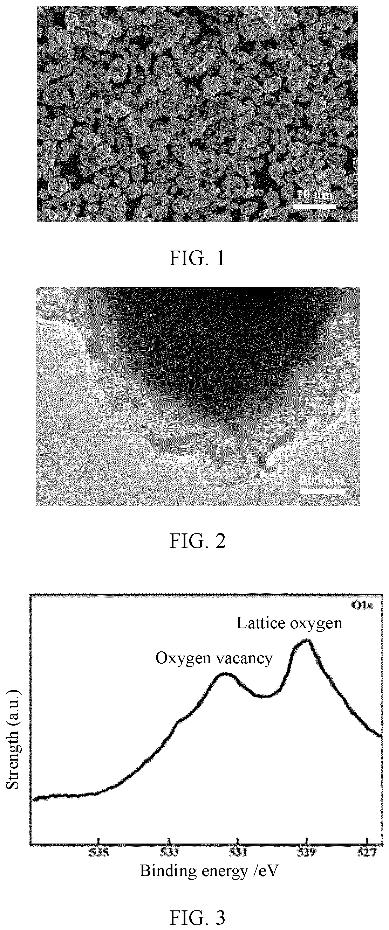

FIG. 1 is a scanning electron microscope image of the positive electrode material obtained in Example 1 described below in this application. FIG. 2 is a scanning electron microscope image of the positive electrode material shown in FIG. 1 at a different magnification. As can be seen from FIGs. 1 and 2, the outer surface of the lithium-rich manganese-based material is coated with a composite material of transition metal oxoacid salt and carbon. The composite material has a mesh structure. When the coating layer contains a composite material with a mesh structure, the stability of the coating structure can be maintained, and in addition, the electrical conductivity of the lithium-rich manganese based material can be increased.

In some embodiments, the transition metal in the transition metal oxoacid salt is at least one selected from Ti, Mo, W, or V Therefore, the surface of the lithium-rich manganese-based material be easily coated with the composite material of transition metal oxoacid salt and carbon.

In some embodiments, the transition metal oxoacid salt is at least one of Li, Na, K, Mg, or Al salts. Optionally, the transition metal oxoacid salt is at least one of Li, Na, or K salts. Therefore, the surface of the lithium-rich manganese-based material can be easily coated with the composite material of transition metal oxoacid salt and carbon.

In some embodiments, the molecular formula of the lithium-rich manganese-based positive electrode material is xLi₂MnO₃•(1-x)LiNi_{y}Co_{z}MnₐM_{1-y-z-a}OᵣA₂₋ᵣ, where 0 < x < 1, 0 ≤ y ≤ 1, 0 ≤ z ≤1, 0 ≤ a ≤ 1, 0 < r ≤ 2, and 0 < y+z+a ≤1; M is at least one of Mg, B, Al, V, Ti, Zr, Sn, and Mo; and A is at least one of F, S, N, and Cl. Therefore, the surface of various lithium-rich manganese-based materials can be coated with the composite material of transition metal oxoacid salt and carbon.

FIG. 3 is an XPS spectrum of the positive electrode material in Example 1 described below in this application.

In some embodiments, optionally, in the coating layer, the transition metal oxoacid salt contains oxygen vacancies, and optionally, the transition metal oxoacid salt satisfies the following conditions: peak intensity ratio of IO₂²⁻/IO²⁻ is 0.5 to 1.2, optionally 0.6 to 0.8; where IO₂²⁻ represents a peak intensity value of oxygen vacancy at 531 eV in an X-ray photoelectron spectroscopy (XPS) test, and IO²⁻represents a peak intensity value of lattice oxygen at 529 eV in the X-ray photoelectron spectroscopy (XPS) test. Therefore, the presence of oxygen vacancies on the surface of the lithium-rich manganese-based positive electrode material can be corroborated by the peak intensity ratio of IO₂²⁻/IO²⁻ in the coating material. More oxygen vacancies indicate a higher peak intensity ratio. This provides the ability to keep the oxygen vacancies formed on the surface of the lithium-rich manganese-based material in a suitable range, so that the release of oxygen during the charge and discharge process of the material can be suppressed; and in addition, the extractable capability of the material can be ensured.

In some embodiments, a powder resistivity of the positive electrode material at 12 MPa is less than or equal to 3000 Q cm, preferably less than or equal to 2000 Ω·cm. The oxygen vacancies in the surface layer of the lithium-rich manganese-based positive electrode material can promote the transport of electrons and lithium ions of the material. The surface carbon coating can further enhance the electronic conductivity of the material, thereby further improving the initial charge-discharge efficiency and rate performance of the positive electrode material.

In some embodiments, a particle type of the positive electrode material is secondary particle, single crystal, or quasi-single crystal, and particle size Dᵥ50 of the particles is between 1 µm to 20 µm, optionally 3 µm to 15 µm. Therefore, the lithium-rich manganese-based positive electrode material has a regular morphology, uniform particle size distribution, and stable structure, thereby ensuring that a lithium-rich manganese-based battery has a high energy density and excellent cycling performance.

In some embodiments, the specific surface area of the positive electrode material is less than 2.0 m²/g, optionally 0.1 m²/g to 1 m²/g. Therefore, the lithium-rich manganese-based positive electrode material has a low specific surface area and a high compacted density, thereby ensuring that a lithium-rich manganese-based battery has a high energy density and excellent cycling performance.

Further, in another embodiment of this application, this application provides a preparation method of positive electrode material, including the following processes: solution preparation process: dispersing a transition metal oxide in deionized water, adding an organic acid salt, adjusting solution pH to a neutral to alkaline range, and then stirring thoroughly to obtain the solution; hydrothermal reaction process: slowly adding lithium-rich manganese-based positive electrode material to the solution for reaction at a constant temperature of 50°C to 100°C for about 2 h to 10 h; drying process: filtering a product of the hydrothermal reaction, and drying a solid obtained by filtration; and sintering process: sintering the dried solid at 300 °C to 600 °C in an inert atmosphere for 4 h to 15 h to obtain a surface modified lithium-rich manganese-based positive electrode material; wherein the transition metal oxide includes at least one of Ti, Mo, W, V, Ta, Nb, or Nd oxides; and an acid ion of the organic acid salt is at least one of an acetate ion, an oxalate ion, or a citrate ion.

Through the above method, the transition metal oxide and organic acid salt are uniformly coated on the surface of the lithium-rich manganese-based material through a hydrothermal process. Through thermal treatment in an inert atmosphere, the organic acid salt undergoes thermal decomposition, resulting in the simultaneous formation of carbon and transition metal oxoacid salt generated from the reactions between the transition metal oxide and the organic acid salt. The presence of carbon promotes the generation of oxygen vacancies in the transition metal oxoacid salt. Ultimately, a composite material including transition metal oxoacid salt containing oxygen vacancies and carbon is coated on the surface of the lithium-rich manganese-based material.

In some embodiments, a counter ion of the organic acid ion in the organic acid salt is an ion of at least one metal selected from Li, Na, K, Mg, or Al, preferably an ion of at least one metal selected from Li, Na, or K. Therefore, the surface of the lithium-rich manganese-based material be easily coated with the composite material of transition metal oxoacid salt and carbon.

In some embodiments, in the solution preparation process, a pH of the solution is controlled within the range of 7 to 15, preferably within the range of 8 to 10. Therefore, the surface of the lithium-rich manganese-based material be easily coated with the composite material of transition metal oxoacid salt and carbon.

In some embodiments, a mass ratio of the transition metal oxide to the organic acid salt is (0.05-10):1, preferably (0.5-2):1. Therefore, the composite material of transition metal oxoacid salt and carbon coated on the surface of the lithium-rich manganese-based material can be stably formed, and the amount of oxygen vacancies in the transition metal oxoacid salt can be adjusted appropriately.

In some embodiments, a ratio of the mass of the lithium-rich manganese-based material added to the mass sum of the transition metal oxide and the organic acid salt is 100:(0.1-30), preferably 100:(1-10). Therefore, by adjusting the ratio of the mass of lithium-rich manganese-based material to the mass sum of the transition metal oxide and the organic acid salt within the above ranges, it is advantageous to regulate the thickness of the coating layer. An increase in the coating amount enables more oxygen vacancies in the transition metal oxoacid salt to be formed within the coating layer.

In some embodiments, in the drying process, the drying temperature is 60°C to 120°C, preferably 80°C to 100°C; and/or the drying time is 1 h to 10 h, preferably 5 h to 8; and/or the drying atmosphere is a vacuum atmosphere, with a vacuum degree maintained at -0.5 bar to -1 bar. Therefore, through vacuum drying, excess moisture on the surface of the material is removed, preventing oxidation of the material surface and avoiding the destruction of oxygen vacancies formed on the surface layer. This allows for appropriate adjustment of the amount of oxygen vacancies in the transition metal oxoacid salt.

In some embodiments, in the sintering process, the inert atmosphere is a nitrogen or argon atmosphere. Therefore, the formation of oxygen vacancies in the transition metal oxoacid salt can be further promoted, while a uniform and tight coating effect of the coating on the surface is achieved.

In addition, the following describes a secondary battery, a battery module, a battery pack, and an electric apparatus in this application with appropriate reference to the accompanying drawings.

### [Secondary battery]

An embodiment of this application provides a secondary battery.

Normally, the secondary battery includes a negative electrode plate, a positive electrode plate, an electrolyte, and a separator. In a charge and discharge process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer disposed on at least one surface of the positive electrode current collector, where the positive electrode film layer includes the positive electrode active material according to the first aspect of this application

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, in addition to the positive electrode material according to the first aspect of this application, other positive electrode active materials may also be included. These positive electrode active materials may be positive electrode active materials well-known in the art and used for batteries. For example, the positive electrode active material may include at least one of the following materials: olivine-structured lithium-containing phosphate, lithium transition metal oxide, and respective modified compounds thereof. However, this application is not limited to such materials, and may alternatively use other conventional materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material well-known in the art and used for batteries. For example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative-electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer may further optionally include other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive, a positive electrode film-forming additive, or may include an additive that can improve some performance of batteries, for example, an additive for improving over-charge performance of batteries, an additive for improving high-temperature performance or low-temperature performance of batteries, and the like.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

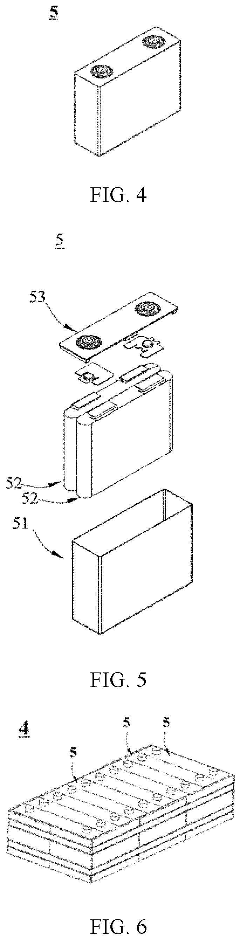

This application does not impose any special limitations on a shape of the secondary battery, and the secondary battery may be cylindrical, rectangular, or of any other shapes. For example, FIG. 4 shows a secondary battery 5 of a rectangular structure as an example.

In some embodiments, referring to FIG. 5, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

### Battery module

In some embodiments, the secondary battery may be assembled into a battery module, and the battery module may include one or more secondary batteries. The specific quantity may be chosen by persons skilled in the art according to use and capacity of the battery module.

FIG. 6 shows a battery module 4 as an example. Refer to FIG. 6. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with accommodating space, and the plurality of secondary batteries 5 are accommodated in the accommodating space.

### Battery pack

In some embodiments, the battery module may be further assembled into a battery pack, and the battery pack may include one or more battery modules. The specific quantity may be chosen by persons skilled in the art according to use and capacity of the battery pack.

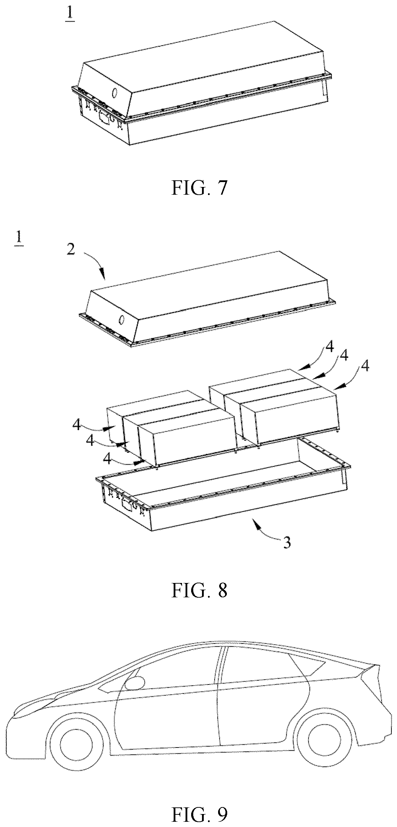

FIGs. 7 and 8 show a battery pack 1 as an example. Referring to FIGs. 7 and 8, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

### Electric apparatus

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 9 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the art or made in accordance with product instructions. The reagents or instruments used are all conventional products that are commercially available if no manufacturer is indicated.

### <Example 1>

### (I) Preparation method

### Preparation of positive electrode material

In Example 1, the preparation method of positive electrode material includes the following processes:
(1) Vanadium pentoxide and potassium citrate at a mass ratio of 2:1 were dispersed in deionized water, with solution pH adjusted to 8, and a resulting solution was thoroughly stirred;
(2) A lithium-rich manganese-based material, 0.5Li₂MnO₃-0.5LiNi_{0.33}Co_{0.33}Mn_{0.33}O₂, was slowly added to the solution in step 1. A ratio of the amount added to the mass sum of vanadium pentoxide and potassium citrate was 100:5. A constant temperature reaction was conducted at 80°C for 10 h;
(3) A product resulted from the constant temperature reaction was filtered and dried at a drying temperature of 100°C for 8 hours under a vacuum atmosphere, with a vacuum level maintained at -1 bar; and
(4) The dried sample was sintered at 500°C in an argon atmosphere for 10 h, resulting in the formation of the lithium-rich manganese-based positive electrode material with a surface coating of a composite material of potassium vanadate containing oxygen vacancies and carbon.

### Preparation of negative electrode plate

The negative electrode active material artificial graphite, conductive agent carbon black, and binder SBR were mixed at a mass ratio of 96:2.5:1.5 and fully stirred in an appropriate amount of deionized water to form a uniform negative electrode slurry. The negative electrode slurry was applied onto a surface of the negative electrode current collector copper foil, followed by drying and cold pressing, to obtain a negative electrode plate.

### Preparation of positive electrode plate

SP (carbon black) was used as the conductive agent, polyvinylidene fluoride (PVDF) was used as the binder, and N-methylpyrrolidone (NMP) was used as the solvent, where PVDF and NMP were mixed at a mass ratio of 2:8 to prepare the adhesive. The positive electrode slurry was prepared by mixing the positive electrode material prepared through the above method, SP, and PVDF at a mass ratio of 90:7:3. The positive electrode slurry was applied onto the surface of the positive electrode current collector aluminum foil and, followed by drying and cold pressing, to obtain a positive electrode plate.

### Preparation of electrolyte

Ethylene carbonate (EC), ethyl methyl carbonate (EMC), and diethyl carbonate (DEC) were mixed at a volume ratio of 1:1:1, and then LiPF₆ was uniformly dissolved in the foregoing solution to obtain an electrolyte, where a concentration of LiPF₆ was 1 mol/L.

### Separator

A polyethylene (PE) film was used.

### Preparation of secondary battery

The positive electrode plate, separator, and negative electrode plate were stacked in sequence and wound to obtain an electrode assembly. The electrode assembly was placed in an outer package, the foregoing electrolyte was added, and steps such as packaging, standing, formation, and aging were performed to obtain a secondary battery.

### (II) Performance evaluation

For the positive electrode material, positive electrode plate, and secondary battery obtained in above (I), the performance test was conducted using the following method.

The results are shown in Table 1.
(i) Morphology of positive electrode active material

The morphology of the positive electrode active material may be determined and measured using a well-known method. For example, a scanning electron microscopy or transmission electron microscopy can be used for the determination.

### (ii) Peak intensity ratio of oxygen vacancy to lattice oxygen in coating layer of positive electrode active material

The peak intensity ratio of oxygen vacancy to lattice oxygen in the coating layer of the positive electrode active material may be determined and measured by using a well-known method, such as X-ray photoelectron spectroscopy (XPS) analysis, and the peak intensity ratio of oxygen vacancy to lattice oxygen is increased in the coating layer containing oxygen vacancies.

### (iii) Measurement of powder resistivity

The resistivity of the positive electrode active material was determined and measured using a well-known method, for example, it can be measured by using a powder resistivity testing instrument (such as lattice ST-2722) with reference to the standard GBT30853-2014.

### (iv) Measurement of Dᵥ50

The Dᵥ50 of the positive electrode active material has a well-known meaning in the art and may be tested by using a method known in the art. For example, a test may be carried out with reference to the standard GB/T 19077.1-2016 by using a laser particle size analyzer (for example, Malvern Master Size 3000). The physical definition of Dᵥ50 is: a corresponding particle size when a cumulative volume distribution percentage of the positive electrode active material reaches 50%.

### (v) Measurement of specific surface area

The specific surface area of the positive electrode active material has a well-known meaning in the art and may be measured by using a method known in the art. For example, the specific surface area can be measured by using the test method of nitrogen adsorption specific surface area analysis with reference to the GB/T 19587-2017 standard, and calculated by using the BET (Brunauer Emmett Teller) method, where the nitrogen adsorption specific surface area analysis test may be performed using the Tri-Star 3020 specific surface area and pore size analyzer and tester from Micromeritics company in USA.

### (vi) Measurement of coating layer thickness

The coating layer thickness of the positive electrode active material has a well-known meaning in the art and may be tested by using a known method in the art. For example, a high-resolution transmission electron microscope can be used for measurement. More precisely, thicknesses of the coating layer at a plurality of (more than 3, for example, 8, 10, or 12) different locations may be measured, and an average thereof is recorded as a thickness of the coating layer.

### (vii) Initial efficiency test

After liquid injection, the pouch battery was charged at a constant current of 0.02C to 3.4 V at 45°C. After being left standing for 5 minutes, the battery was further charged at a constant current of 0.1C to 3.75 V, and the capacity was recorded and denoted as Z1. Then, degassing and second sealing were performed on the battery, and the second-sealed battery was placed at 25°C and charged at a constant current of 0.33C to 4.5 V, then charged at a constant voltage to 0.02C, and left standing for 5 minutes. The capacity was recorded and denoted as Z2. Subsequently, the battery was discharged at 0.33C to 2.0 V, and the capacity was recorded and denoted as D1.

The initial efficiency was calculated using the following formula: Initial efficiency = D1/(Z1 + Z2)

### (viii) Discharge capacity test

In a constant temperature environment at 25°C, at 2.0 V to 4.5 V, the lithium-ion battery was charged to 4.5 V at 0.33C, and then charged at a constant voltage of 4.5 V to a current of 0.05C. After being left standing for 5 minutes, the battery was discharged at 0.33C to 2.0 V, and the specific capacity of the lithium-ion battery at the 0.33C discharge rate was recorded. After being left standing for 5 minutes, the battery was charged at 0.33C to 4.5 V, and then charged at a constant voltage of 4.5 V to a current of 0.05C. After being left standing for 5 minutes, the battery was discharged at 0.5C to 2.0 V, and the specific capacity of the lithium-ion battery at the 0.5C discharge rate was recorded.

### (ix) Cycle test of full battery

Cycle test: In a constant temperature environment at 25°C or 45°C, the full battery was charged at a constant current of 0.5C to a voltage of 4.46 V, then charged at a constant voltage of 4.46 V to a current of 0.05C. After being left standing for 5 minutes, the battery was discharged at a constant current of 0.5C to a voltage of 2.3 V This was one charge and discharge cycle. The discharge capacity of this cycle was the discharge capacity of the first cycle. After 500 cycles of charge and discharge tests were performed on the full battery, the remaining reversible discharge capacity was recorded.

### <Example 2>

Except that the positive electrode material was prepared using the following steps, the positive electrode plate was obtained by using the same preparation method as that in Example 1.
(1) Titanium dioxide and sodium oxalate at a mass ratio of 1.5:1 were dispersed in deionized water, with solution pH adjusted to 8, and a resulting solution was thoroughly stirred;
(2) A lithium-rich manganese-based material, 0.5Li₂MnO₃-0.5LiNi_{0.33}Co_{0.33}Mn_{0.33}O₂, was slowly added to the solution in step 1. A ratio of the amount added to the mass sum of titanium dioxide and sodium oxalate was 100:10. A constant temperature reaction was conducted at 80°C for 10 h;
(3) A product resulted from the constant temperature reaction was filtered and dried at a drying temperature of 100°C for 8 hours under a vacuum atmosphere, with a vacuum level maintained at -1 bar; and
(4) The dried sample was sintered at 500°C in an argon atmosphere for 10 h, resulting in the formation of the lithium-rich manganese-based positive electrode material with a surface coating of a composite material of sodium titanate containing oxygen vacancies and carbon.

### <Example 3>

Except that the positive electrode material was prepared using the following steps, the positive electrode plate was obtained by using the same preparation method as that in Example 1.
(1) Molybdenum trioxide and potassium acetate at a mass ratio of 1:1 were dispersed in deionized water, with solution pH adjusted to 8, and a resulting solution was thoroughly stirred;
(2) A lithium-rich manganese-based material, 0.5Li₂MnO₃-0.5LiNi_{0.33}Co_{0.33}Mn_{0.33}O₂, was slowly added to the solution in step 1. A ratio of the amount added to the mass sum of molybdenum trioxide and potassium acetate was 100:8. A constant temperature reaction was conducted at 80°C for 10 h;
(3) A product resulted from the constant temperature reaction was filtered and dried at a drying temperature of 100°C for 8 hours under a vacuum atmosphere, with a vacuum level maintained at -1 bar; and
(4) The dried sample was sintered at 500°C in an argon atmosphere for 10 h, resulting in the formation of the lithium-rich manganese-based positive electrode material with a surface coating of a composite material of potassium molybdate containing oxygen vacancies and carbon.

### <Example 4> to <Example 5>

In Examples 4 to 5, except that the core composition of the positive electrode material was changed as shown in Table 1, the positive electrode material was obtained by using the same preparation method as that in Example 1.

### <Example 6> to <Example 10>

In Examples 6 to 10, except that the conditions in each preparation process was changed as shown in Table 2, the positive electrode material was obtained by using the same raw material composition and a similar preparation method as those in Example 1.

### <Comparative Example 1>

The positive electrode material in Comparative Example 1 was prepared by using the following steps.

Potassium vanadate and lithium-rich manganese-based material 0.5Li₂MnO₃-0.5LiNi_{0.33}Co_{0.33}Mn_{0.33}O₂ at a mass ratio of 5:100 were ball-milled for 2 hours, then sintered for 10 hours at 500°C in an inert atmosphere, and a lithium-rich manganese-based positive electrode material with surface coating of potassium vanadate was obtained.

### <Comparative Example 2>

The positive electrode material for Comparative Example 2 were prepared by using the following steps.

Glucose vanadate and lithium-rich manganese-based material 0.5Li₂MnO₃-0.5LiNi_{0.33}Co_{0.33}Mn_{0.33}O₂ at a mass ratio of 2:100 were ball-milled for 2 hours, then sintered for 10 hours at 500°C in an inert atmosphere, and a lithium-rich manganese-based positive electrode material with surface coating of carbon was obtained.

### <Comparative Example 3>

The positive electrode material for Comparative Example 3 were prepared by using the following steps.

Potassium vanadate and glucose were mixed at a mass ratio of 2:1 and then lithium-rich manganese-based material 0.5Li₂MnO₃-0.5LiNi_{0.33}Co_{0.33}Mn_{0.33}O₂ was added. A ratio of the amount added to the mass sum of potassium vanadate and glucose was 100:5. A resulting mixture was ball-milled for 2 hours, then sintered for 10 hours at 500°C in an inert atmosphere, and a lithium-rich manganese-based positive electrode material with a surface coating of potassium vanadate and carbon was obtained.

The test results of the positive electrode materials and secondary batteries obtained in Examples 1 to 10 and Comparative Examples 1 to 3 are listed in Table 1.

### <Example 11> to <Example 16>

In Examples 11 to 16, except that the raw material ratios in the solution preparation process were changed as shown in Table 2, the positive electrode material was obtained by using the same preparation method as that in Example 1.

### <Example 17> to <Example 22>

In Examples 17 to 22, except that the raw material ratios in the hydrothermal reaction process were changed as shown in Table 2, the positive electrode material was obtained by using the same preparation method as that in Example 1.

The peak intensity ratio of oxygen vacancy to lattice oxygen in the coating layers of the positive electrode materials obtained from Examples 1 to 3, 6 to 22, and Comparative Examples 1 to 3, as well as the thicknesses of the coating layers, are listed in Table 2.

**Table 1**

| No. | Positive electrode active material related parameters | | | | | | | | Performance parameters for full battery | | | |
|---|---|---|---|---|---|---|---|---|---|---|---|---|
| | Core composition | Whether coating layer has oxygen vacancies | Composition of coating layer | Particle morphology | Peak intensity ratio of IO₂²⁻/IO²⁻ | Median particle size Dv50 (µm) | Resistivity (Ω cm) | Initial efficiency (%) | Capacit y at 0.33C (mAh/g) | Electric capacity at 0.5C (mAh/g) | Capacity retention rate after 500 cycles at 25°C for full battery (%) | Capacity retention rate after 500 cycles at 45°C for full battery (%) |
| Example 1 | 0.5Li₂MnO₃-0.5LiNi_{0.33}Co_{0.33} Mn_{0.33}O₂ | Yes | Potassium vanadate + carbon | Secondary sphere | 0.65 | 7.5 | 1865 | 89.2 | 245.2 | 235.2 | 98.2 | 96.5 |
| Example 2 | 0.5Li₂MnO₃-0.5LiNi_{0.33}Co_{0.33} Mn_{0.33}O₂ | Yes | Sodium titanate + carbon | Secondary sphere | 0.65 | 7.8 | 1545 | 88.5 | 243.2 | 233.2 | 98.5 | 95.2 |
| Example 3 | 0.5Li₂MnO₃-0.5LiNi_{0.33}Co_{0.33} Mn_{0.33}O₂ | Yes | Potassium molybdate + carbon | Secondary sphere | 0.7 | 7.6 | 1762 | 90.2 | 240.6 | 230.6 | 97.6 | 96.3 |
| Example 4 | 0.5Li₂MnO₃-0.5LiNi_{0.32}Co_{0.33} Mn_{0.33}Mg_{0.01}O₂ | Yes | Potassium vanadate + carbon | Secondary sphere | 0.68 | 6.8 | 1789 | 89.5 | 242.5 | 232.2 | 98.5 | 96.5 |
| Example 5 | 0.5Li₂MnO₃-0.5LiNi_{0.33}Co_{0.33} Mn_{0.33}O_{1.99}F_{0.01} | Yes | Potassium vanadate + carbon | Secondary sphere | 0.7 | 7.2 | 1842 | 88.8 | 241.2 | 234.2 | 97.8 | 95.8 |
| Example 6 | 0.5Li₂MnO₃-0.5LiNi_{0.33}Co_{0.33} Mn_{0.33}O₂ | Yes | Potassium vanadate + carbon | Secondary sphere | 0.45 | 8.5 | 2200 | 85.8 | 230.5 | 215.2 | 90.4 | 88.5 |
| Example 7 | 0.5Li₂MnO₃-0.5LiNi_{0.33}Co_{0.33} Mn_{0.33}O₂ | Yes | Potassium vanadate + carbon | Secondary sphere | 0.85 | 7.9 | 1945 | 88.2 | 240.6 | 230.6 | 96.8 | 94.8 |
| Example 8 | 0.5Li₂MnO₃-0.5LiNi_{0.33}Co_{0.33} Mn_{0.33}O₂ | Yes | Potassium vanadate + carbon | Secondary sphere | 0.75 | 8.2 | 1932 | 89.2 | 243.6 | 234.6 | 97.8 | 95.8 |
| Example 9 | 0.5Li₂MnO₃-0.5LiNi_{0.33}Co_{0.33} Mn_{0.33}O₂ | Yes | Potassium vanadate + carbon | Secondary sphere | 0.55 | 7.6 | 1889 | 88.5 | 241.6 | 231.6 | 96.2 | 94.3 |
| Example 10 | 0.5Li₂MnO₃-0.5LiNi_{0.33}Co_{0.33} Mn_{0.33}O₂ | Yes | Potassium vanadate + carbon | Secondary sphere | 1.25 | 9.2 | 2100 | 83.5 | 225.2 | 210.8 | 89.6 | 87.9 |
| Comparative Example 1 | 0.5Li₂MnO₃-0.5LiNi_{0.33}Co_{0.33} Mn_{0.33}O₂ | No | Potassium vanadate | Secondary sphere | / | 7.2 | 4670 | 81.2 | 220.6 | 205.6 | 85.6 | 85.8 |
| Comparative Example 2 | 0.5Li₂MnO₃-0.5LiNi_{0.33}Co_{0.33} Mn_{0.33}O₂ | No | Carbon | Secondary sphere | / | 6.8 | 3545 | 80.6 | 215.6 | 200.6 | 85.3 | 87.6 |
| Comparative Example 3 | 0.5Li₂MnO₃-0.5LiNi_{0.33}Co_{0.33} Mn_{0.33}O₂ | No | Potassium vanadate + carbon | Secondary sphere | / | 8.5 | 4352 | 82.5 | 223.2 | 208.2 | 87.8 | 88.6 |

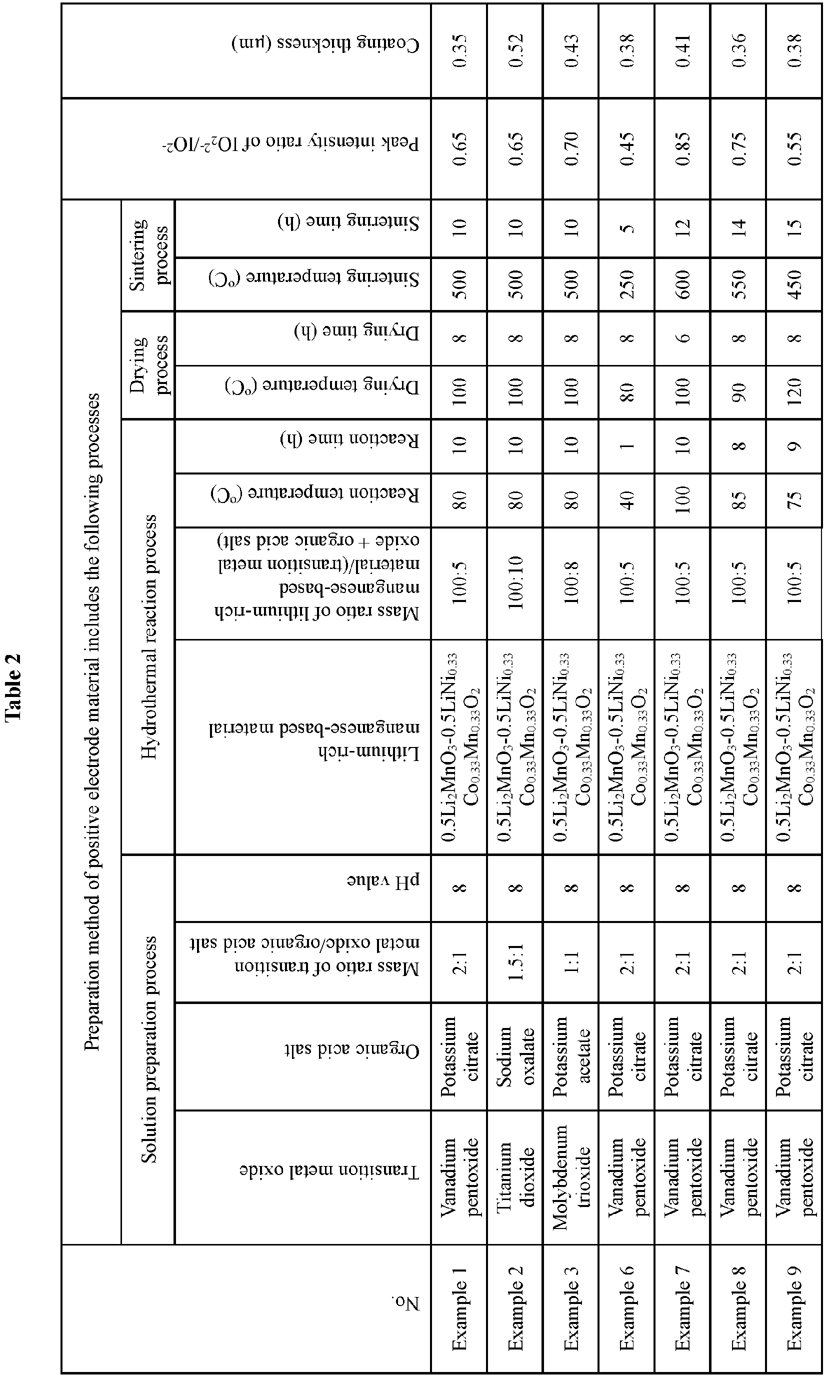

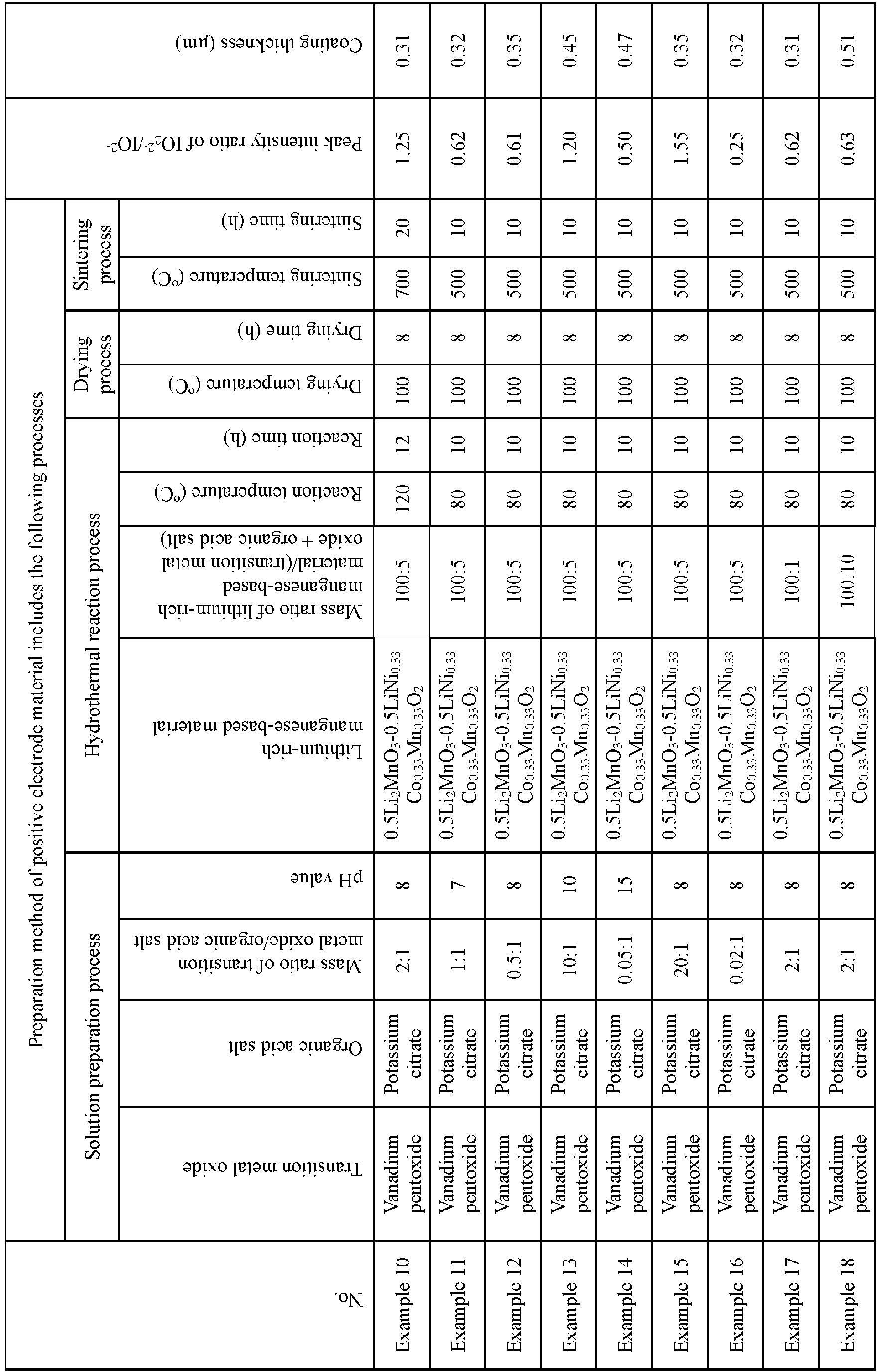

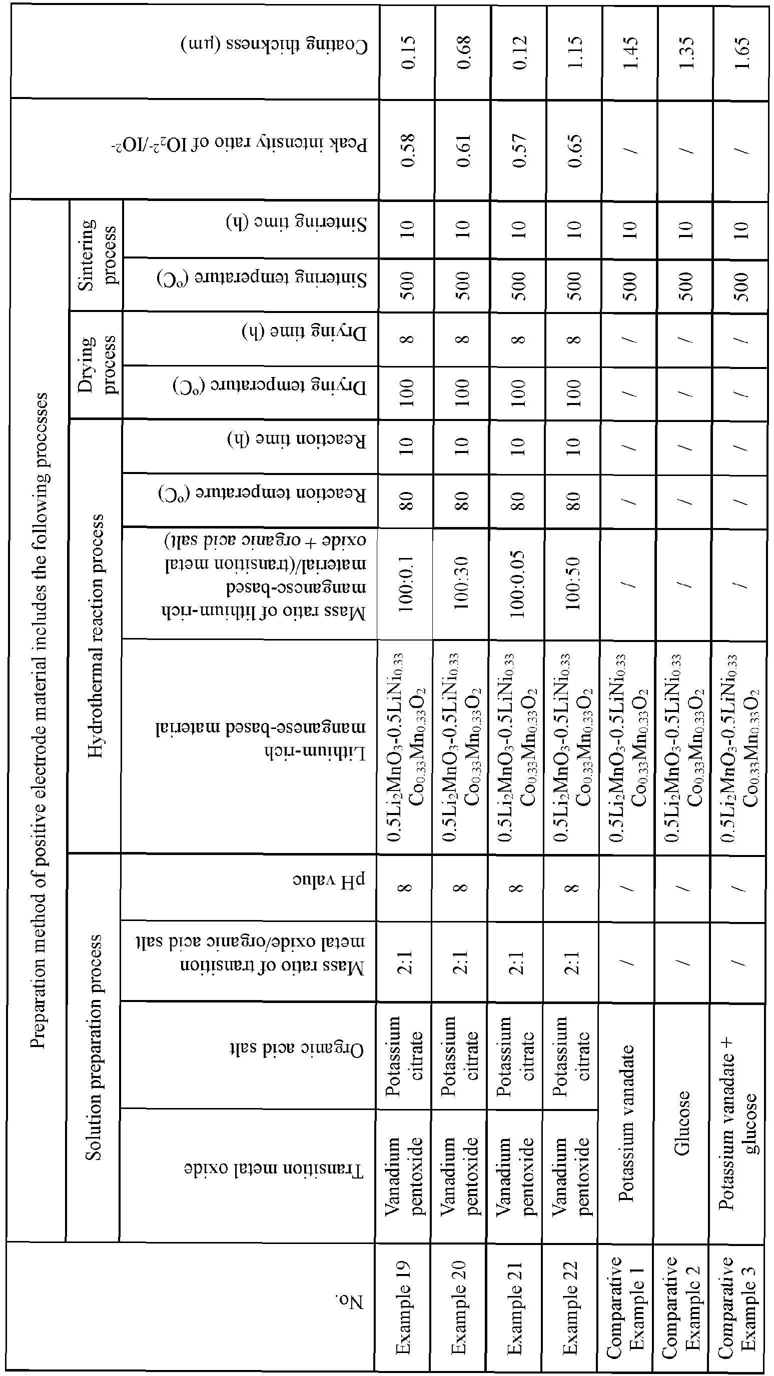

From the results in Table 1, it can be seen that in Examples 1 to 10 in which the lithium-rich manganese-based positive electrode material is coated with a composite material of transition metal oxoacid salt containing oxygen vacancies and carbon, the initial efficiency, discharge capacity at 0.33C and 0.5C (rate performance), and cycling performance at 25°C and 45°C are all excellent. In contrast, in Comparative Examples 1 to 3, although the lithium-rich manganese-based positive electrode material is coated with a coating layer, the coating layer contains only transition metal oxoacid salt or carbon, or a simple mixture of the two, and no oxygen vacancy is formed in the coating layer. As a result, the initial efficiency, discharge capacity at 0.33C and 0.5C, and cycling performance at 25°C and 45°C are all poor.

Furthermore, by comparing Examples 6 and 10 with Examples 7 to 9, it can be seen that by the setting of oxygen vacancies in the coating layer within an appropriate range, the initial efficiency, discharge capacity at 0.33C and 0.5C, and cycling performance at 25°C and 45°C can be further improved.

From the results in Table 2, it can be seen from Examples 6 to 10 that by the changing of the temperature and time in the hydrothermal reaction process, drying process, and sintering process, the amount of oxygen vacancy in the coating layer can be changed, thereby the peak intensity ratio of IO₂²/IO²⁻ can be changed. From Examples 11 to 16, it can be seen that by the changing of the mass ratio of transition metal oxide and organic acid salt in the solution preparation process, the amount of oxygen vacancy in the coating layer can also be changed, thereby the peak intensity ratio of IO₂²/IO²⁻ can be changed. From Examples 17 to 22, it can be seen that changing the ratio of lithium-rich manganese-based material to the mass sum of transition metal oxide and organic acid salt in the hydrothermal reaction process has a significant impact on the thickness of the coating layer. A thicker coating layer results in a higher number of oxygen vacancies in the coating layer. An excessively thin or excessively thick coating layer may affect the coating effectiveness, thereby affecting the electrical performance of the material.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A positive electrode material,
comprising
a core containing a lithium-rich manganese-based positive electrode material; and
a coating layer enveloping outer surface of the core and comprising a composite material of a transition metal oxoacid salt and carbon, wherein
a transition metal in the transition metal oxoacid salt is selected from at least one of Ti, Mo, W, V, Ta, Nb, or Nd; and
the composite material has a mesh structure.

2. The positive electrode material according to claim 1, wherein
the transition metal in the transition metal oxoacid salt is selected from at least one of Ti, Mo, W, or V

3. The positive electrode material according to claim 1 or 2, wherein
the transition metal oxoacid salt is at least one of Li, Na, K, Mg, or Al salts; and
optionally, the transition metal oxoacid salt is at least one of Li, Na, or K salts.

4. The positive electrode material according to any one of claims 1 to 3, wherein
the molecular formula of the lithium-rich manganese-based positive electrode material is xLi₂MnO₃•(1-x)LiNi_{y}Co_{z}MnₐM_{1-y-z-a}OᵣA₂₋ᵣ, wherein 0 < x < 1, 0 ≤ y ≤ 1, 0 ≤ z ≤1, 0 ≤ a ≤ 1, 0 < r ≤2, and 0 < y+z+a ≤1; M is at least one of Mg, B, Al, V, Ti, Zr, Sn, and Mo; and A is at least one of F, S, N, and Cl.

5. The positive electrode material according to any one of claims 1 to 4, wherein
in the coating layer, the transition metal oxoacid salt contains oxygen vacancies;
optionally, the transition metal oxoacid salt satisfies the following conditions:
a peak intensity ratio of IO₂²/IO²⁻ is 0.5 to 1.2, optionally 0.6 to 0.8, wherein
IO₂²⁻ represents a peak intensity value of oxygen vacancy at 531 eV in an X-ray photoelectron spectroscopy (XPS) test, and IO²⁻ represents a peak intensity value of lattice oxygen at 529eV in the X-ray photoelectron spectroscopy (XPS) test.

6. The positive electrode material according to any one of claims 1 to 5, wherein
a powder resistivity of the positive electrode material at 12 MPa is less than or equal to 3000 Ω·cm, preferably less than or equal to 2000 Ω·cm.

7. The positive electrode material according to any one of claims 1 to 6, wherein
a particle type of the positive electrode material is secondary particle, single crystal, or quasi-single crystal, and particle size Dᵥ50 of the particles is between 1 µm to 20 µm, optionally 3 µm to 15 µm.

8. The positive electrode material according to any one of claims 1 to 7, wherein
a specific surface area of the positive electrode material is less than 2.0 m²/g, optionally between 0.1 m²/g and 1 m²/g.

9. A preparation method of a positive electrode material,
comprising the following processes:
solution preparation process: dispersing a transition metal oxide in deionized water, adding an organic acid salt, adjusting solution pH to a neutral to alkaline range, and then stirring thoroughly to obtain the solution;
hydrothermal reaction process: slowly adding lithium-rich manganese-based positive electrode material to the solution for reaction at a constant temperature of 50°C to 100°C for about 2 h to 10 h;
drying process: filtering a product of the hydrothermal reaction process, and drying a solid obtained by filtration; and
sintering process: sintering the dried solid at 300 °C to 600 °C in an inert atmosphere for 4 h to 15 h to obtain a surface modified lithium-rich manganese-based positive electrode material; wherein
the transition metal oxide comprises at least one of Ti, Mo, W, V, Ta, Nb or Nd oxides; and
an acid ion of the organic acid salt is at least one of an acetate ion, an oxalate ion, or a citrate ion.

10. The preparation method of the positive electrode material according to claim 9, wherein
a counter ion of the organic acid ion in the organic acid salt is an ion of at least one metal selected from Li, Na, K, Mg, or Al, preferably an ion of at least one metal selected from Li, Na, or K.

11. The preparation method of the positive electrode material according to claim 9 or 10, wherein
in the solution preparation process, a pH of the solution is controlled within 7 to 15, preferably within 8 to 10.

12. The preparation method of the positive electrode material according to any one of claims 9 to 11, wherein
a mass ratio of the transition metal oxide to the organic acid salt is (0.05-10):1, preferably (0.5-2): 1.

13. The preparation method of the positive electrode material according to any one of claims 9 to 12, wherein
a ratio of a mass of the lithium-rich manganese-based material added to a mass sum of the transition metal oxide and the organic acid salt is 100:(0.1-30), preferably 100:(1-10).

14. The preparation method of the positive electrode material according to any one of claims 9 to 13, wherein
in the drying process,
a drying temperature is 60°C to 120°C, preferably 80°C to 100°C; and/or,
a drying time is 1 h to 10 h, preferably 5 h to 8 h; and/or
a drying atmosphere is a vacuum atmosphere, a vacuum degree being maintained at -0.5 bar to -1 bar.

15. The preparation method of the positive electrode material according to any one of claims 9 to 14, wherein
in the sintering process, the inert atmosphere is a nitrogen or argon atmosphere.

16. A secondary battery, wherein
the secondary battery comprises the positive electrode material according to any one of claims 1 to 8 or a positive electrode material prepared by the preparation method according to any one of claims 9 to 15.

17. A battery module, wherein
the battery module comprises the secondary battery according to claim 16.

18. A battery pack, wherein
the battery pack comprises the battery module according to claim 17.

19. An electric apparatus, wherein
the electric apparatus comprises at least one of the secondary battery according to claim 16, the battery module according to claim 17, or the battery pack according to claim 18.
